# EUROPEAN PATENT SPECIFICATION

(11) **EP 4 496 095 B1**
(45) Date of publication and mention of the grant of the patent: **09.12.2026**
(21) Application number: 23769524.2
(22) Date of filing: 21.02.2023
(51) Int. Cl.: H01M 50/204, H01M 50/244, H01M 50/249, H01M 50/258, H01M 50/262, H01M 50/264, H01M 50/289

(54) **BATTERY AND ELECTRIC APPARATUS**
BATTERIE UND ELEKTRISCHE VORRICHTUNG
BATTERIE ET APPAREIL ÉLECTRIQUE

(30) Priority: 18.03.2022 CN 202220606564 U
(43) Date of publication of application: 22.01.2025
(73) Proprietor: Contemporary Amperex Technology (Hong Kong) Limited, Hong Kong (HK)
(72) Inventor: YE, Qingfeng, Xiamen, Fujian 361001 (CN); WANG, Xia, Xiamen, Fujian 361001 (CN); YANG, Xin, Xiamen, Fujian 361001 (CN); WU, Yuanhe, Xiamen, Fujian 361001 (CN); SHUAI, Ling, Xiamen, Fujian 361001 (CN)
(74) Representative: Gong, Jinping
(86) International application number: PCT/CN2023/077488
(87) International publication number: WO 2023/174016

(56) References cited:
- EP-A2- 2 685 520
- WO-A1-2021/040503
- WO-A1-2021/177683
- CN-A- 114 122 603
- CN-A- 114 128 017
- CN-U- 214 378 653
- CN-U- 214 957 097
- US-A1- 2002 086 202
- US-A1- 2003 193 313
- US-A1- 2004 035 807
- US-A1- 2016 218 333
- US-B2- 9 812 682

## Description

### CROSS-REFERENCE TO RELATED APPLICATIONS

This application claims priority to Chinese Patent Application No. 202220606564.X, filed on March 18, 2022 and entitled "BATTERY AND ELECTRIC DEVICE".

### TECHNICAL FIELD

This application relates to the field of battery technologies and specifically to a battery and an electric device.

### BACKGROUND

Energy conservation and emission reduction are crucial to the sustainable development of the automobile industry. Electric vehicles, with their advantages in energy conservation and environmental protection, have become an important part of sustainable development of the automobile industry. For electric vehicles, battery technology is an important factor in connection with their development.

During the manufacturing process of batteries, production costs of batteries are a non-negligible issue. Therefore, how production costs of batteries are reduced is an urgent technical problem that needs to be solved in battery technology.
WO 2021/040503 A1 describes a battery rack with a rack case that provides improved durability to prevent deformation or damage due to external impact during transportation. The battery rack according to this document comprises a plurality of battery modules, at least one rack case having a plurality of shelf frames configured such that the plurality of battery modules are mounted thereon in a given direction, and a plurality of fixing frames that have a plate-shaped body portion extending lengthwise along the plurality of battery modules and that are mounted to a rear frame of the rack frame through connecting bars. The fixing frames are configured to be attachable/detachable to/from each of the plurality of battery modules. Futther battery racks are shown in the following publications: US 2004/035807 A1, US 9 812 682 B2, US 2016/218333 A1 or EP 2 685 520 A2.

### SUMMARY

This application provides a battery and an electric device, so as to reduce production costs of the battery.

This application is implemented using the following technical solutions.

According to a first aspect, this application provides a battery according to claim 1. The battery includes: a cabinet, the cabinet being internally provided with a chamber and the cabinet including a top surface, a bottom surface, and a plurality of side surfaces, where the top surface and the bottom surface are disposed opposite each other, the plurality of side surfaces enclose the top surface at one end, the plurality of side surfaces enclose the bottom surface at the other end, and the top surface, the bottom surface, and the plurality of side surfaces collectively form the chamber; and a plurality of battery modules, disposed in the chamber and sequentially arranged in a direction from the top surface to the bottom surface; where at least one of the plurality of side surfaces is configured to be detachable from the cabinet.

As compared with a solution where the top surface of the cabinet is detachable and the battery modules are hoisted inside the cabinet, in the technical solution of the embodiments of this application, at least one side surface of the cabinet is set to be detachable, so that the battery modules can be placed into the cabinet from the side without sequential hoisting, thereby improving the assembly efficiency of the battery modules, improving the production efficiency of the battery, and reducing the production costs of the battery.

In some embodiments, two opposite ones of the plurality of side surfaces are both configured to be detachable from the cabinet.

In the technical solution of the embodiments of this application, the two opposite side surfaces are set to be detachable from the cabinet, so that the battery modules can be placed into the chamber from two opposite side openings of the cabinet, that is, battery modules at different layers can be respectively placed into the chamber through the two side openings, thereby improving the assembly efficiency of the battery modules and reducing the production costs of the battery.

According to the invention, the plurality of side surfaces of the cabinet include a first side surface, a second side surface, a third side surface, and a fourth side surface, the first side surface and the second side surface are disposed opposite each other, and the third side surface and the fourth side surface are disposed opposite each other; and areas of the first side surface and the second side surface are each greater than those of the third side surface and the fourth side surface.

In this technical solution, the four side surfaces (the first side surface, the second side surface, the third side surface, and the fourth side surface) together with the top surface and the bottom surface form a cuboid structure, which facilitates the placement of rectangular battery modules in the cabinet and the assembly of the battery in an electric device.

According to the invention, said first side surface is configured to be detachably connected to the top surface, the bottom surface, the third side surface, and the fourth side surface.

According to the invention, the first side surface may be a larger surface of the cabinet, and when the battery modules are placed through the side opening corresponding to the first side surface of the cabinet, the placement depth of the battery modules is shallow, reducing the assembly time of the battery modules, thereby improving the production efficiency of the battery and reducing the production costs. When all the battery modules are placed in place, the first side surface may be connected to the top surface, the bottom surface, the third side surface, and the fourth side surface, ensuring the structural strength of the cabinet and the overall structural strength of the battery.

Said first side surface includes first connecting parts and a second connecting part, where the first connecting parts extend along a height direction of the cabinet, two first connecting parts are spaced apart along a width direction of the cabinet, and the second connecting part extends along the width direction of the cabinet and is connected to the two first connecting parts.

In this technical solution, the first side surface has a simple structure and is easy to manufacture. The first connecting parts and the second connecting part are provided, and the second connecting part is connected to the two first connecting parts, which can ensure that the first side surface has high structural strength, thereby ensuring the structural strength of the cabinet and the safety of the battery.

In some embodiments, the first side surface further includes a first fixing part and a second fixing part; two opposite ends of the first connecting part are each connected to the first fixing part and are detachably connected to the top surface and the bottom surface through the first fixing part respectively; and two opposite ends of the second connecting part are each connected to the second fixing part and are detachably connected to the third side surface and the fourth side surface through the second fixing part respectively.

In the technical solution of the embodiments of this application, with the first fixing part provided, the first connecting part is detachably connected to the top surface and the bottom surface; and with the second fixing part provided, the second connecting part is detachably connected to the third side surface and the fourth side surface. This can ensure that the first side surface can be conveniently disassembled from and assembled with the top surface, the bottom surface, the third side surface, and the fourth side surface, thereby ensuring that after the battery modules are assembled in place, the first side surface can be efficiently connected to the top surface, the bottom surface, the third side surface, and the fourth side surface, improving the production efficiency of the battery, and reducing the production costs of the battery.

In some embodiments, the first side surface further includes a third connecting part disposed between the two first connecting parts, where the third connecting part includes two third connecting members, the two third connecting members are disposed crosswise on the second connecting part, one end of one third connecting member is connected to one end of one first connecting part close to the top surface, and the other end of the third connecting member is connected to one end of the other first connecting part close to the bottom surface.

In the technical solution of the embodiments of this application, the third connecting members are disposed on the second connecting part, and the ends of the third connecting members are connected to the ends of the first connecting parts, which can effectively improve the structural strength of the first side surface. That is, with the third connecting part provided, the structural strength of the first side surface can be improved, thereby improving the overall structural strength of the battery.

In some embodiments, the first side surface further includes fourth connecting parts, where two fourth connecting parts are each disposed on one side of one first connecting part facing away from the other first connecting part; and the fourth connecting part includes two fourth connecting members, the two fourth connecting members are disposed crosswise on the second connecting part, one end of one fourth connecting member is connected to one end of the first connecting part adjacent thereto close to the top surface, and one end of the other fourth connecting member is connected to one end of the first connecting part adjacent thereto close to the bottom surface.

In the technical solution of the embodiments of this application, the fourth connecting parts are disposed on one side of one first connecting part facing away from the other first connecting part, so that the structural strength of the first side surface can be effectively improved, thereby improving the overall structural strength of the battery.

In some embodiments, the first side surface further includes a third fixing part, and ends of the fourth connecting members away from the first connecting parts are each connected to the third fixing part; and one fourth connecting part is detachably connected to the top surface, the bottom surface, and the third side surface through the third fixing part, and the other fourth connecting part is detachably connected to the top surface, the bottom surface, and the fourth side surface through the third fixing part.

In the technical solution of the embodiments of this application, the fourth connecting parts are connected to the top surface, the bottom surface, the third side surface, and the fourth side surface through a plurality of third fixing parts, which can ensure the stability between the first side surface, the top surface, the bottom surface, the third side surface, and the fourth side surface.

In some embodiments, the cabinet further includes a plurality of layers of supporting member sets, the plurality of layers of supporting member sets are spaced apart in the chamber along the direction from the top surface to the bottom surface, and each layer of supporting member sets support the battery modules.

In the technical solution of the embodiments of this application, with the plurality of layers of supporting member sets provided, all the battery modules can be supported by the supporting member sets, ensuring that the battery modules are stably disposed in the chamber. In addition, since the battery modules are placed sideways in the chamber, with the plurality of layers of supporting member sets provided, the battery modules can be placed in the chamber out of sequence, without placing the battery modules sequentially from a bottom layer to a top layer as in the prior art, thereby improving the production efficiency of the battery and reducing the production costs; and when the battery is maintained, the battery modules can be directly taken out from a side, without moving battery modules above the battery modules to be taken out, thereby improving the maintenance efficiency.

In some embodiments, the supporting member set includes a plurality of supporting members and a plurality of supporting and fixing members, the plurality of supporting members are respectively disposed on inner walls of all the side surfaces and are configured to support the battery modules, and all the supporting members are connected to the battery modules through the supporting and fixing member.

In the technical solution of the embodiments of this application, the battery modules are supported by the supporting members, and the battery modules are fixed by the supporting and fixing members, so that the battery modules can be stably disposed in the chamber, improving the overall stability of the battery and ensuring the safety of the battery.

According to a second aspect, this disclosure provides an electric device including the battery according to any one of the embodiments of the first aspect, where the battery is configured to supply electrical energy.

The foregoing description is merely an overview of the technical solution of this application. For a better understanding of the technical means in this application such that they can be implemented according to the content of the specification, and to make the above and other objectives, features, and advantages of this application more obvious and easier to understand, the following describes specific embodiments of this application.

### BRIEF DESCRIPTION OF DRAWINGS

To describe the technical solutions in embodiments of this application more clearly, the following briefly describes the accompanying drawings required for describing some embodiments. It is appreciated that the accompanying drawings below show merely some embodiments of this application and thus should not be considered as limitations on the scope. Persons of ordinary skill in the art may still derive other related drawings from the accompanying drawings without creative efforts.
FIG. 1 is a schematic structural diagram of a vehicle according to some embodiments of this application;
FIG. 2 is a three-dimensional exploded view of a battery according to some embodiments of this application;
FIG. 3 is a three-dimensional diagram of a battery according to some embodiments of this application;
FIG. 4 is a schematic diagram of a partial structure of a cabinet according to some embodiments of this application;
FIG. 5 is a schematic diagram of a first side surface according to some embodiments of this application;
FIG. 6 is an enlarged view of position VI in FIG. 5;
FIG. 7 is an enlarged view of position VII in FIG. 5;
FIG. 8 is an enlarged view of position VIII in FIG. 5;
FIG. 9 is a schematic diagram of a partial structure of a battery according to some embodiments of this application;
FIG. 10 is an enlarged view of position X in FIG. 9;
FIG. 11 is an enlarged view of position XI in FIG. 5; and
FIG. 12 is a schematic diagram of a battery with a casing according to some embodiments of this application.

Reference signs: 100. battery; 101. battery module; 102. casing; 10. cabinet; 10a. chamber; 11. top surface; 12. bottom surface; 13. side surface; 13a. first side surface; 13b. second side surface; 13c. third side surface; 13d. fourth side surface; 20. first connecting part; 21. second connecting part; 23. first fixing part; 230. first bracket; 231. first screwing member; 24. second fixing part; 240. second bracket; 241. second screwing member; 25. third connecting part; 250. third connecting member; 26. fourth connecting part; 260. fourth connecting member; 27. third fixing part; 270. third bracket; 271. third screwing member; 28. supporting member set; 281. supporting member; 2810. first supporting member; 2811. second supporting member; 282. supporting and fixing member; 1000. vehicle; 300. controller; and 200. motor.

### DESCRIPTION OF EMBODIMENTS

The following describes in detail embodiments of technical solutions of this application with reference to the accompanying drawings. The following embodiments are merely intended for a clearer description of the technical solutions of this application and therefore are used as just examples which do not constitute any limitations on the protection scope of this application.

Unless otherwise defined, all technical and scientific terms used herein shall have the same meanings as commonly understood by persons skilled in the art to which this application relates. The terms used herein are intended to merely describe the specific embodiments rather than to limit this application. The terms "include", "comprise", and "have" and any other variations thereof in the specification, claims and brief description of drawings of this application are intended to cover non-exclusive inclusions.

In the description of some embodiments of this application, the terms "first", "second", and the like are merely intended to distinguish between different objects, and shall not be understood as any indication or implication of relative importance or any implicit indication of the number, sequence or primary-secondary relationship of the technical features indicated. In the description of the embodiments of this application, "multiple" means more than two, unless otherwise specifically defined.

In this specification, reference to "embodiment" means that specific features, structures or characteristics described with reference to the embodiment may be incorporated in at least one embodiment of this application. The word "embodiment" appearing in various places in this specification does not necessarily refer to the same embodiment or an independent or alternative embodiment that is exclusive of other embodiments. Persons skilled in the art explicitly and implicitly understand that the embodiments described herein may be combined with other embodiments.

In the description of the embodiments of this application, the term "and/or" is only an associative relationship for describing associated objects, indicating that three relationships may be present. For example, A and/or B may indicate the following three cases: presence of A, presence of both A and B, and presence of B. In addition, the character "/" in this specification generally indicates an "or" relationship between the contextually associated objects.

In the descriptions of the embodiments of this application, the term "multiple" means more than two (inclusive). Similarly, "multiple groups" means more than two (inclusive) groups, and "multiple pieces" means more than two (inclusive) pieces.

In the description of the embodiments of this application, the orientations or positional relationships indicated by the technical terms "center", "longitudinal", "transverse", "length", "width", "thickness", "upper", "lower", "front", "rear", "left", "right", "vertical", "horizontal", "top", "bottom", "inside", "outside", "clockwise", "counterclockwise", "axial", " radial", "circumferential", and the like are based on the orientations or positional relationships as shown in the accompanying drawings. These terms are merely for ease and brevity of description of the embodiments of this application rather than indicating or implying that the means or components mentioned must have specific orientations or must be constructed or manipulated according to specific orientations, and therefore shall not be construed as any limitation on the embodiments of this application.

In the descriptions of the embodiments of this application, unless otherwise specified and defined explicitly, the technical terms "mounting", "connection", "join", and "fastening" should be understood in their general senses. For example, they may refer to a fixed connection, a detachable connection, or an integral connection, may refer to a mechanical connection or an electrical connection, and may refer to a direct connection, an indirect connection via an intermediate medium, an internal communication between two elements, or an interaction between two elements. Persons of ordinary skill in the art can understand specific meanings of these terms in the embodiments of this application as suitable to specific situations.

In this application, the battery cell may include a lithium-ion secondary battery, a lithium-ion primary battery, a lithium-sulfur battery, a sodium-lithium-ion battery, a sodium-ion battery, a magnesium-ion battery, or the like. This is not limited in the embodiments of this application. The battery cell may be cylindrical, cuboid, or of other shapes. This is not limited in the embodiments of this application either.

The battery mentioned in the embodiments of this application is a single physical module that includes one or more battery cells for providing a higher voltage and capacity. For example, the battery mentioned in this application may include a battery module. The battery module typically includes a box configured to enclose one or more battery cells. The box can prevent liquids or other foreign matter from affecting charging or discharging of the battery cell. The battery typically includes a cabinet for accommodating one or more battery modules, and the cabinet can prevent external substances from affecting the battery module and causing damage to the battery module. In addition, the cabinet may be installed on an electric device body to fix the battery on the electric device body.

The battery cell includes an electrode assembly and an electrolyte. The electrode assembly includes a positive electrode plate, a negative electrode plate, and a separator. The battery cell mainly relies on migration of metal ions between the positive electrode plate and the negative electrode plate to work. The positive electrode plate includes a positive electrode current collector and a positive electrode active substance layer. The positive electrode active substance layer is applied on a surface of the positive electrode current collector. The part of positive electrode current collector uncoated with the positive electrode active substance layer protrudes out of the part of positive electrode current collector coated with the positive electrode active substance layer and serves as a positive electrode tab. A lithium-ion battery is used as an example, for which, the positive electrode current collector may be made of aluminum and the positive electrode active substance may be lithium cobaltate, lithium iron phosphate, ternary lithium, lithium manganate, or the like. The negative electrode plate includes a negative electrode current collector and a negative electrode active substance layer. The negative electrode active substance layer is applied on a surface of the negative electrode current collector. The part of negative electrode current collector uncoated with the negative electrode active substance layer protrudes out of the part of negative electrode current collector coated with the negative electrode active substance layer and serves as a negative electrode tab. The negative electrode current collector may be made of copper, and the negative electrode active substance may be carbon, silicon, or the like. To allow a large current to pass through without any fusing, a plurality of positive electrode tabs are provided and stacked together, and a plurality of negative electrode tabs are provided and stacked together. The separator may be made of PP (polypropylene, polypropylene), PE (polyethylene, polyethylene), or the like.

Currently, from the perspective of market development, electric vehicles have become an important part of sustainable development of the automobile industry. A battery supplies energy for driving of a vehicle and operation of various electric components in the vehicle. For electric vehicles, battery technology is an important factor in connection with their development. For the development of battery technology, many design factors need to be considered, for example, performance parameters such as energy density, cycle life, discharge capacity, and charge and discharge rate, as well as the production costs of the battery. Lower production costs of the battery lead to greater market values.

The inventors have found that in existing batteries, the cabinet is of an integrally welded structure, with an opening reserved at the top of the cabinet (that is, a top surface of the cabinet is detachable). This cabinet structure determines that battery modules can only be hoisted layer by layer from a bottom layer to a top layer, and after all the battery modules are assembled, the reserved opening at the top is closed. Using the hoisting method to place the battery modules results in low assembly efficiency, difficulty in achieving automation, and consequently high production costs for the battery. In addition, when the battery modules in the bottom layer fail, all the battery modules in the top layer need to be removed for maintenance of the battery modules in the bottom layer, resulting in low maintenance efficiency.

In view of this, to reduce the production costs of the battery and improve the maintenance efficiency of the battery, the inventors, after in-depth research, have designed a battery. The battery includes: a cabinet, the cabinet being internally provided with a chamber and the cabinet including a top surface, a bottom surface, and a plurality of side surfaces, where the top surface and the bottom surface are disposed opposite each other, the plurality of side surfaces enclose the top surface at one end, the plurality of side surfaces enclose the bottom surface at the other end, and the top surface, the bottom surface, and the plurality of side surfaces collectively form the chamber; and a plurality of battery modules, disposed in the chamber and sequentially arranged in a direction from the top surface to the bottom surface; where at least one of the plurality of side surfaces is configured to be detachable from the cabinet.

As compared with a solution where the top surface of the cabinet is detachable and the battery modules are hoisted inside the cabinet, in the technical solution of the embodiments of this application, at least one side surface of the cabinet is set to be detachable, so that the battery modules can be placed into the cabinet from the side without sequential hoisting, thereby improving the assembly efficiency of the battery modules, improving the production efficiency of the battery, and reducing the production costs of the battery. In addition, since the battery modules are placed sideways in the cabinet, the battery modules can be placed by an automated device, for example, an automated trolley is used for carrying the battery modules and pushing them into the cabinet. Moreover, since the hoisting method is not used to place the battery modules, there are no height space requirements for plants, which can effectively reduce the costs of plant site selection, thereby reducing the production costs of the battery. In addition, since the battery modules are placed sideways, when the battery modules at any layer fail, the detachable side surfaces can be removed to take out the faulty battery modules without affecting other battery modules (without removing other battery modules), thereby ensuring the maintenance efficiency of the battery.

The technical solution described in the embodiments of this application is applicable to batteries and electric devices using a battery.

The electric device may be a vehicle, a mobile phone, a portable device, a notebook computer, a ship, a spacecraft, an electric toy, an electric tool, or the like. The vehicle may be a new energy vehicle. The new energy vehicle may be a battery electric vehicle, a hybrid electric vehicle, a range-extended electric vehicle, or the like. The spacecraft includes an airplane, a rocket, a space shuttle, a spaceship, and the like. The electric toy includes a fixed or mobile electric toy, for example, a game console, an electric toy car, an electric toy ship, and an electric toy airplane. The electric tool includes an electric metal cutting tool, an electric grinding tool, an electric assembly tool, and an electric railway-specific tool, for example, an electric drill, an electric grinder, an electric wrench, an electric screwdriver, an electric hammer, an electric impact drill, a concrete vibrator, and an electric planer. The embodiments of this application impose no special limitation on the foregoing electric device.

For ease of description, the electric device being a vehicle is used as example for description of the following embodiments.

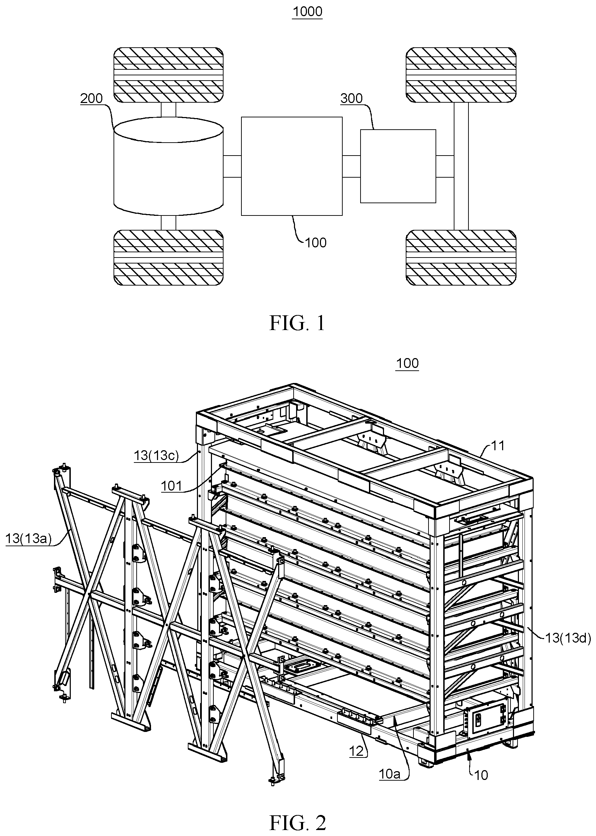

FIG. 1 is a schematic structural diagram of a vehicle 1000 according to some embodiments of this application.

A controller 300, a motor 200, and a battery 100 may be provided in the vehicle 1000, where the controller 300 is configured to control the battery 100 to supply power to the motor 200. For example, the battery 100 may be provided at the bottom, front, or rear of the vehicle 1000. The battery 100 may be configured to supply power to the vehicle 1000. For example, the battery 100 may be used as an operational power source for the vehicle 1000 that is configured for a circuit system of the vehicle 1000, for example, to satisfy power needs of start, navigation, and running of the vehicle 1000. In another embodiment of this application, the battery 100 can be used as not only the operational power source for the vehicle 1000, but also as a driving power source for the vehicle 1000, replacing or partially replacing fossil fuel or natural gas to provide driving traction for the vehicle 1000. Optionally, when the battery 100 is applied to a heavy truck (heavy truck), the battery 100 may be fixed on the back of a heavy truck cab through a cabinet 10.

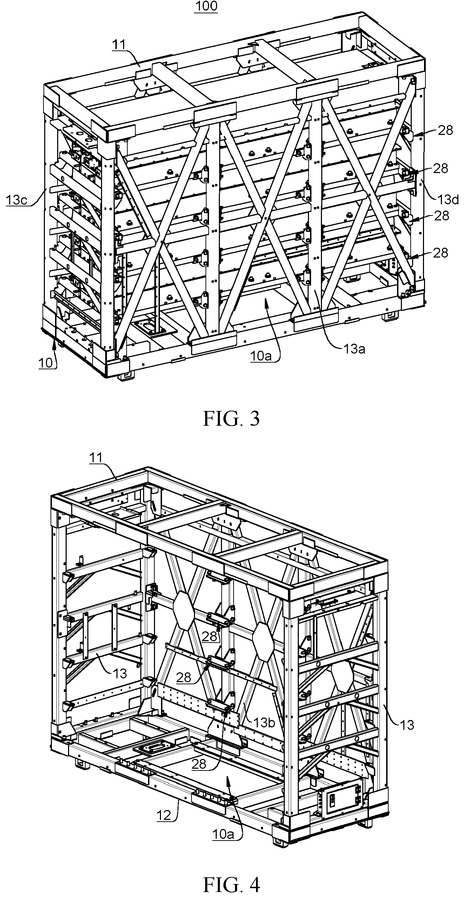

Referring to FIG. 2 and FIG. 3, FIG. 2 is a three-dimensional exploded view of a battery 100 according to some embodiments of this application, and FIG. 3 is a three-dimensional diagram of a battery 100 according to some embodiments of this application. In FIG. 2, one side surface 13 of the battery 100 is separated, indicating that this side surface 13 is detachable from the cabinet 10.

The battery 100 includes a cabinet 10 and a plurality of battery modules 101. The cabinet 10 is internally provided with a chamber 10a, and the cabinet 10 includes a top surface 11, a bottom surface 12, and a plurality of side surfaces 13, where the top surface 11 and the bottom surface 12 are disposed opposite each other, the plurality of side surfaces 13 enclose the top surface 11 at one end, the plurality of side surfaces 13 enclose the bottom surface 12 at the other end, and the top surface 11, the bottom surface 12, and the plurality of side surfaces 13 collectively form the chamber 10a. The plurality of battery modules 101 are disposed in the chamber 10a and sequentially arranged in a direction from the top surface 11 to the bottom surface 12. At least one of the plurality of side surfaces 13 is configured to be detachable from the cabinet 10.

The cabinet 10 is a component for accommodating the battery modules 101 to protect the battery modules 101. The cabinet 10 is also a component formed by interconnecting the top surface 11, the bottom surface 12, and the plurality of side surfaces 13. The top surface 11 is a component connected to the side surfaces 13 to form a top structure of the cabinet 10. The bottom surface 12 is a component connected to the side surfaces 13 and disposed opposite the top surface 11 to form a bottom structure of the cabinet 10. The side surfaces 13 are components connected to the top surface 11 at one end and connected to the bottom surface 12 at other end to form a side structure of the cabinet 10. The chamber 10a is a region formed by enclosing the top surface 11, the bottom surface 12, and all the side surfaces 13, and this region can accommodate the battery modules 101.

"At least one of the plurality of side surfaces 13 is configured to be detachable from the cabinet 10" means that at least one side surface 13 of the cabinet 10 can be detached from the cabinet 10 to form an opening communicating with the chamber 10a in a corresponding region, the battery modules 101 can be placed through the opening, or the opening can be closed after this side surface 13 is installed, so that the battery modules 101 are enclosed in the chamber 10a.

As compared with a solution where the top surface 11 of the cabinet 10 is detachable and the battery modules 101 are hoisted inside the chamber 10a, in the technical solution of the embodiments of this application, at least one side surface 13 of the cabinet 10 is set to be detachable, so that the battery modules 101 can be placed into the cabinet 10 from the side without sequential hoisting, thereby improving the assembly efficiency of the battery modules 101, improving the production efficiency of the battery 100, and reducing the production costs of the battery 100.

In some embodiments of this application, two opposite side surfaces 13 of the plurality of side surfaces 13 are both configured to be detachable from the cabinet 10.

"Two opposite side surfaces 13" refer to two side surfaces 13 in a same direction, where the direction corresponds to a direction in which the battery modules 101 are placed. For example, when the two opposite side surfaces 13 are detached from the cabinet 10, two opposite side openings are formed, and the battery modules 101 can be placed into the chamber 10a from either side opening.

In the technical solution of the embodiments of this application, the two opposite side surfaces 13 are set to be detachable from the cabinet 10, so that the battery modules 101 can be placed into the chamber 10a from two opposite side openings of the cabinet 10, that is, battery modules 101 at different layers can be respectively placed into the chamber 10a through the two side openings, thereby improving the assembly efficiency of the battery modules 101 and reducing the production costs of the battery 100.

In some embodiments of this application, referring to FIG. 2 and FIG. 4, FIG. 4 is a schematic diagram of a partial structure of the cabinet 10 according to some embodiments of this application. The plurality of side surfaces 13 include a first side surface 13a, a second side surface 13b, a third side surface 13c, and a fourth side surface 13d, where the first side surface 13a and the second side surface 13b are disposed opposite each other, and the third side surface 13c and the fourth side surface 13d are disposed opposite each other; areas of the first side surface 13a and the second side surface 13b are each greater than areas of the third side surface 13c and the fourth side surface 13d.

The side surfaces 13 of the cabinet 10 include the first side surface 13a and the second side surface 13b disposed opposite each other, and the third side surface 13c and the fourth side surface 13d disposed opposite each other. The bottom surface 12 and the top surface 11 are enclosed by the first side surface 13a, the second side surface 13b, the third side surface 13c, and the fourth side surface 13d, so that the cabinet 10 is of a cuboid structure and is conveniently installed in a vehicle. The first side surface 13a and the second side surface 13b are larger surfaces of the cabinet 10, and the third side surface 13c and the fourth side surface 13d are smaller surfaces of the cabinet 10.

In the technical solution of the embodiments of this application, the four side surfaces 13 (the first side surface 13a, the second side surface 13b, the third side surface 13c, and the fourth side surface 13d) together with the top surface 11 and the bottom surface 12 form a cuboid structure, which facilitates the placement of rectangular battery modules 101 in the cabinet 10 and the assembly of the battery 100 in an electric device such as a heavy truck. For example, the battery 100 can be conveniently installed on the back of a heavy truck cab.

In some embodiments of this application, the first side surface 13a is configured to be detachably connected to the top surface 11, the bottom surface 12, the third side surface 13c, and the fourth side surface 13d.

The first side surface 13a, as one of the larger surfaces (with a larger surface area) of the cabinet 10, is detachably connected to the top surface 11, the bottom surface 12, the third side surface 13c, and the fourth side surface 13d, and can be conveniently detached from the cabinet 10, so that a side opening can be formed at the larger surface of the cabinet 10, facilitating the placement of the battery modules 101.

In the technical solution of the embodiments of this application, the first side surface 13a may be a larger surface of the cabinet 10, and when the battery modules 101 are placed through the side opening corresponding to the first side surface 13a of the cabinet 10, the placement depth of the battery modules 101 is shallow, reducing the assembly time of the battery modules 101, thereby improving the production efficiency of the battery 100 and reducing the production costs. When all the battery modules 101 are placed in place, the first side surface 13a may be connected to the top surface 11, the bottom surface 12, the third side surface 13c, and the fourth side surface 13d, ensuring the structural strength of the cabinet 10 and the overall structural strength of the battery 100.

Optionally, in some other embodiments, the first side surface 13a may be detachably connected to the top surface 11 and the bottom surface 12.

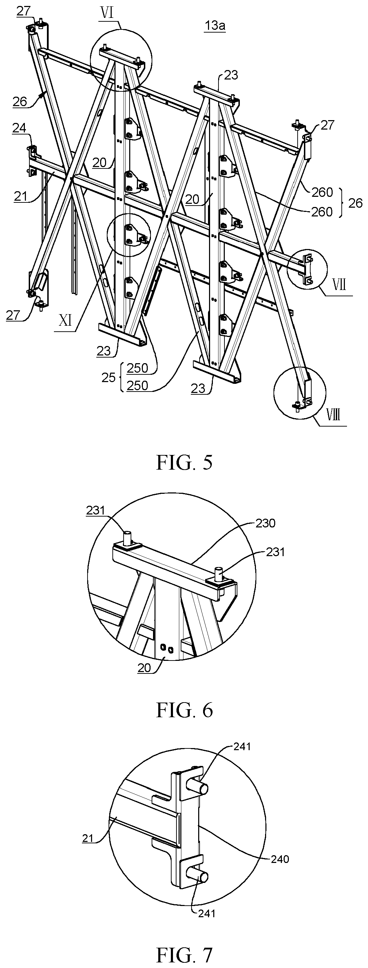

In some embodiments of this application, referring to FIG. 5, FIG. 5 is a schematic diagram of the first side surface 13a according to some embodiments of this application. The first side surface 13a includes first connecting parts 20 and a second connecting part 21, where the first connecting parts 20 extend along a height direction of the cabinet 10, two first connecting parts 20 are spaced apart along a width direction of the cabinet 10, and the second connecting part 21 extends along the width direction of the cabinet 10 and is connected to the two first connecting parts 20.

The first connecting parts 20 are rod-shaped and extend along the height direction of the cabinet 10. The second connecting part 21 is rod-shaped and extends along the width direction of the cabinet 10. The first side surface 13a includes two first connecting parts 20, where the two first connecting parts 20 are spaced apart along the width direction of the cabinet 10 and are collectively connected to the second connecting part 21.

In the technical solution of the embodiments of this application, the first side surface 13a has a simple structure and is easy to manufacture. The first connecting parts 20 and the second connecting part 21 are provided, and the second connecting part 21 is connected to the two first connecting parts 20, which can ensure that the first side surface 13a has high structural strength, thereby ensuring the structural strength of the cabinet 10 and the safety of the battery 100. Since the battery modules 101 are sequentially arranged along the height direction of the cabinet 10, the first connecting parts 20 extending along the height direction of the cabinet 10 can effectively constrain the battery modules 101, preventing the battery modules 101 from coming out of the cabinet 10, and ensuring that the battery modules 101 are stably located in the chamber 10a.

In some embodiments of this application, referring to FIG. 5, the first side surface 13a further includes a first fixing part 23 and a second fixing part 24; two opposite ends of the first connecting part 20 are each connected to the first fixing part 23 and are detachably connected to the top surface 11 and the bottom surface 12 through the first fixing part 23 respectively; and two opposite ends of the second connecting part 21 are each connected to the second fixing part 24 and are detachably connected to the third side surface 13c and the fourth side surface 13d through the second fixing part 24 respectively.

The two opposite ends of the first connecting part 20 are each provided with the first fixing part 23, where the first fixing part 23 disposed at one end is configured to detachably connect this end of the first connecting part 20 to the top surface 11, and the first fixing part 23 disposed at the other end is configured to detachably connect the other end of the first connecting part 20 to the bottom surface 12. Referring to FIG. 6, FIG. 6 is an enlarged view of position VI in FIG. 5. FIG. 6 shows the first fixing part 23 cooperating with the top surface 11. In some embodiments, the first fixing part 23 includes a first bracket 230 and a first screwing member 231, where the first bracket 230 may be welded to an end of the first connecting part 20, the first bracket 230 is provided with a hole structure, and the top surface 11 or the bottom surface 12 may be provided with a screw hole or a hole structure, so that the first screwing member 231 passes through the first bracket 230 to be connected to the top surface 11 or the bottom surface 12. When the first connecting part 20 needs to be disassembled, the first screwing member 231 is unscrewed and removed, so that the first connecting part 20 is removed. Referring to FIG. 7, FIG. 7 is an enlarged view of the part VII in FIG. 5. FIG. 7 shows the second fixing part 24 cooperating with the third side surface 13c. In some embodiments, the second fixing part 24 includes a second bracket 240 and a second screwing member 241, where the second bracket 240 may be welded to an end of the second connecting part 21, the second bracket 240 is provided with a hole structure, and the third side surface 13c or the fourth side surface 13d may be provided with a screw hole or a hole structure, so that the second screwing member 241 passes through the second bracket 240 to be connected to the third side surface 13c or the fourth side surface 13d. When the second connecting part 21 needs to be disassembled, the second screwing member 241 is unscrewed and removed, so that the second connecting part 21 is removed.

In the technical solution of the embodiments of this application, with the first fixing part 23 provided, the first connecting part is detachably connected to the top surface 11 and the bottom surface 12; and with the second fixing part 24 provided, the second connecting part 21 is detachably connected to the third side surface 13c and the fourth side surface 13d. This can ensure that the first side surface 13a can be conveniently disassembled from and assembled with the top surface 11, the bottom surface 12, the third side surface 13c, and the fourth side surface 13d, thereby ensuring that after the battery modules 101 are assembled in place, the first side surface 13a can be efficiently connected to the top surface 11, the bottom surface 12, the third side surface 13c, and the fourth side surface 13d, improving the production efficiency of the battery 100, and reducing the production costs of the battery 100.

In some embodiments of this application, referring to FIG. 5, the first side surface 13a further includes a third connecting part 25 disposed between the two first connecting parts 20, where the third connecting part 25 includes two third connecting members 250, the two third connecting members 250 are disposed crosswise on the second connecting part 21, one end of one third connecting member 250 is connected to one end of one first connecting part 20 close to the top surface 11, and the other end of the third connecting member 250 is connected to one end of the other first connecting part 20 close to the bottom surface 12.

The third connecting part 25 is a component connecting the first connecting parts 20 and the second connecting part 21 to improve the structural strength of the first side surface 13a. The third connecting part 25 includes two third connecting members 250, where the third connecting members 250 are rod-shaped, and the two third connecting members 250 are disposed crosswise, with cross parts connected to the second connecting part 21. One end of the third connecting member 250 is connected to the end of one first connecting part 20 close to the top surface 11, and the other end of the third connecting member 250 is connected to the end of the other first connecting part 20 close to the bottom surface 12, so that each third connecting member 250 is connected to the second connecting part 21 and the two first connecting parts 20.

In the technical solution of the embodiments of this application, the third connecting members 250 are disposed on the second connecting part 21, and the ends of the third connecting members 250 are connected to the ends of the first connecting parts 20, which can effectively improve the structural strength of the first side surface 13a. That is, with the third connecting part 25 provided, the structural strength of the first side surface 13a can be improved, thereby improving the overall structural strength of the battery 100.

Optionally, as shown in FIG. 6, the ends of the third connecting members 250 may alternatively be welded to the first fixing part 23, that is, welded to the first bracket 230, so that the third connecting members 250 are assembled with the bottom surface 12 or the top surface 11 through the first fixing part 23, improving the stability of the connection between the first side surface 13a and the top surface 11 and the stability of the connection between the first side surface 13a and the bottom surface 12.

In some embodiments of this application, referring to FIG. 5, the first side surface 13a further includes fourth connecting parts 26, where two fourth connecting parts 26 are each disposed on one side of one first connecting part 20 facing away from the other first connecting part 20. The fourth connecting part 26 includes two fourth connecting members 260, the two fourth connecting members 260 are disposed crosswise on the second connecting part 21, one end of one fourth connecting member 260 is connected to one end of the first connecting part 20 adjacent thereto close to the top surface 11, and one end of the other fourth connecting member 260 is connected to one end of the first connecting part 20 adjacent thereto close to the bottom surface 12.

The fourth connecting part 26 is a component connecting the first connecting parts 20 and the second connecting part 21 to improve the structural strength of the first side surface 13a. The fourth connecting part 26 includes two fourth connecting members 260 disposed crosswise, where cross parts of the two fourth connecting members 260 are disposed on the second connecting part 21, and ends of the two fourth connecting members 260 adjacent to the first connecting parts 20 are respectively connected to two ends of this first connecting part 20.

In the technical solution of the embodiments of this application, the fourth connecting part 26 is disposed on one side of one first connecting part 20 facing away from the other first connecting part 20, so that the structural strength of the first side surface 13a can be effectively improved, thereby improving the overall structural strength of the battery 100.

In some embodiments of this application, referring to FIG. 5, the first side surface 13a further includes a third fixing part 27, and ends of the fourth connecting members 260 away from the first connecting parts 20 are each connected to the third fixing part 27; and one fourth connecting part 26 is detachably connected to the top surface 11, the bottom surface 12, and the third side surface 13c through the third fixing part 27, and the other fourth connecting part 26 is detachably connected to the top surface 11, the bottom surface 12, and the fourth side surface 13d through the third fixing part 27.

The third fixing part 27 is a component provided at the end of the fourth connecting member 260. In one fourth connecting part 26, through two third fixing parts 27, the fourth connecting part 26, the top surface 11, the bottom surface 12, and the third side surface 13c can be assembled (in a detachable connection); in the other fourth connecting part 26, through two third fixing parts 27, the fourth connecting part 26, the top surface 11, the bottom surface 12, and the fourth side surface 13d can be assembled (in a detachable connection).

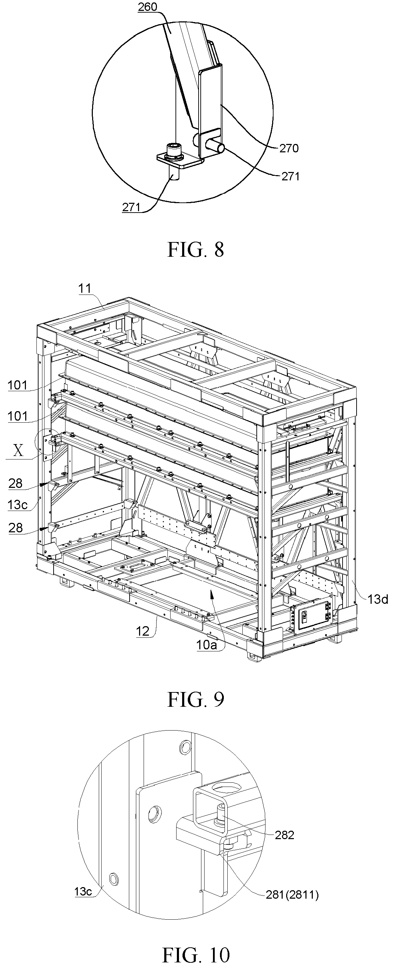

Optionally, referring to FIG. 8, FIG. 8 is an enlarged view of position VIII in FIG. 5. In some embodiments, the third fixing part 27 may include a third bracket 270 and a third screwing member 271. The third bracket 270 includes a first surface and a second surface perpendicular to each other, the first surface and the second surface being each provided with a hole structure for the third screwing member 271 to pass through, where the first surface corresponds to the top surface 11 or the bottom surface 12, and the second surface corresponds to the third side surface 13c, or the fourth side surface 13d. Parts corresponding to the top surface 11, the bottom surface 12, the third side surface 13c, or the fourth side surface 13d are each provided with a hole structure or a screw hole to fix the screwing member. When the fourth connecting part 26 needs to be disassembled, the third screwing member 271 is unscrewed and removed, so that the fourth connecting part 26 is removed.

In the technical solution of the embodiments of this application, the fourth connecting parts 26 are connected to the top surface 11, the bottom surface 12, the third side surface 13c, and the fourth side surface 13d through a plurality of third fixing parts 27, which can ensure the stability between the first side surface 13a, the top surface 11, the bottom surface 12, the third side surface 13c, and the fourth side surface 13d.

In some embodiments of this application, referring to FIG. 9, FIG. 9 is a schematic diagram of a partial structure of the battery 100 according to some embodiments of this application. The cabinet 10 further includes a plurality of layers of supporting member sets 28, the plurality of layers of supporting member sets 28 are spaced apart in the chamber 10a along the direction from the top surface 11 to the bottom surface 12, and each layer of supporting member sets 28 support the battery modules 101.

The plurality of layers of supporting member sets 28 mean that the cabinet 10 is provided with supporting member sets 28 having the same number of layers as the battery modules 101, and each layer of supporting member sets 28 can support the corresponding battery modules 101.

In the technical solution of the embodiments of this application, with the plurality of layers of supporting member sets 28 provided, all the battery modules 101 can be supported by the supporting member sets 28, ensuring that the battery modules 101 are stably disposed in the chamber 10a. In addition, since the battery modules 101 are placed sideways in the chamber 10a, with the plurality of layers of supporting member sets 28 provided, the battery modules 101 can be placed in the chamber 10a out of sequence, without placing the battery modules 101 sequentially from a bottom layer to a top layer as in the prior art, thereby improving the production efficiency of the battery 100 and reducing the production costs; and when the battery 100 is maintained, the battery modules 101 can be directly taken out from a side, without moving battery modules 101 above the battery modules 101 to be taken out, thereby improving the maintenance efficiency.

In some embodiments of this application, the supporting member set 28 includes a plurality of supporting members 281 and a plurality of supporting and fixing members 282, the plurality of supporting members 281 are respectively disposed on inner walls of all the side surfaces 13 and are configured to support the battery modules 101, and all the supporting members 281 are connected to the battery modules 101 through the supporting and fixing members 282.

The supporting members 281 are components capable of supporting the battery modules 101, and the supporting and fixing members 282 are components connecting the supporting members 281 to the battery modules 101.

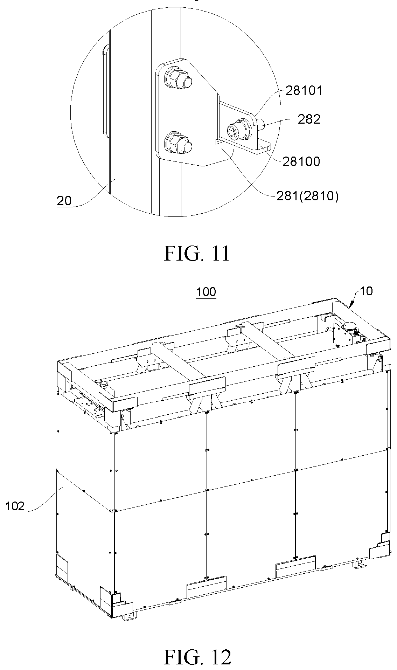

Optionally, the first side surface 13a, the second side surface 13b, the third side surface 13c, and the fourth side surface 13d may be each provided with the supporting members 281 and the supporting and fixing members 282. The first side surface 13a and the second side surface 13b may be provided with the same supporting members 281, such as first supporting members 2810 (refer to FIG. 11). The third side surface 13c and the fourth side surface 13d may be provided with the same supporting members 281, such as second supporting members 2811 (refer to FIG. 10). The supporting and fixing members 282 may be bolts, and the bolts pass through the supporting members 281 to be screwed into screw holes of the battery modules 101.

Referring to FIG. 10, FIG. 10 is an enlarged view of position X in FIG. 9. FIG. 10 shows the second supporting member 2811 provided on the third side surface 13c. The second supporting member 2811 is welded to the third side surface 13c and has a second supporting surface. The second supporting surface is provided with a through hole, and the bolt (the supporting and fixing member 282) passes through the through hole to be screwed into the screw hole of the battery module 101 corresponding to the second supporting surface.

Referring to FIG. 11, FIG. 11 is an enlarged view of position XI in FIG. 5. FIG. 11 shows the first supporting member 2810 provided on the first side surface 13a. The first supporting member 2810 is fixed to the first connecting part 20 of the first side surface 13a via screws and nuts. The first supporting member 2810 has a first supporting surface 28100 for supporting the bottom of the battery module 101 and a third supporting surface 28101 attached to a side of the battery module 101. The supporting and fixing member 282 passes through the third supporting surface 28101 to be connected to the corresponding screw hole in the side of the battery module 101. Optionally, in some embodiments, the first side surface 13a is detachable from the cabinet 10, so that after the battery modules 101 are placed in place in the chamber 10a, the battery modules 101 are mainly supported by the supporting member sets 28 on the second side surface 13b, the third side surface 13c, and the fourth side surface 13d. When the first side surface 13a is assembled, an operator can first loosen the screws and nuts between the first supporting members 2810 and the first connecting parts 20 such that the first supporting members 2810 on the first side surface 13a support the bottoms of the battery modules 101, and then tighten the screws and nuts between the first supporting members 2810 and the first connecting parts 20.

In the technical solution of the embodiments of this application, the battery modules 101 are supported by the supporting members 281, and the battery modules 101 are fixed by the supporting and fixing members 282, so that the battery modules 101 can be stably disposed in the chamber 10a, improving the overall stability of the battery 100 and ensuring the safety of the battery 100.

In some embodiments of this application, an electric device is further provided and includes the battery 100 described above, where the battery 100 is configured to supply electrical energy.

In some embodiments of this application, a battery 100 is further provided. Refer to FIG. 2 to FIG. 12. FIG. 12 is a schematic diagram of a battery with a casing according to some embodiments of this application. The battery 100 includes a cabinet 10 and a plurality of battery modules 101. The cabinet 10 includes a top surface 11, a bottom surface 12, and four side surfaces 13. The top surface 11, the bottom surface 12, and the four side surfaces 13 enclose the chamber 10a of the cabinet 10. The plurality of battery modules 101 are sequentially arranged in the chamber 10a in a direction from the top surface 11 to the bottom surface 12. Each side surface 13 is provided with supporting member sets 28. A plurality of layers of supporting member sets 28 are provided. Each layer of supporting member sets 28 support the corresponding battery modules 101. The four side surfaces 13 include a first side surface 13a, a second side surface 13b, a third side surface 13c, and a fourth side surface 13d. The first side surface 13a is detachably connected to the top surface 11, the bottom surface 12, the third side surface 13c, and the fourth side surface 13d.

The first side surface 13a is connected to the top surface 11, the bottom surface 12, the third side surface 13c, and the fourth side surface 13d via bolts so as to detach the first side surface 13a. Specifically, the first side surface 13a includes first connecting parts 20, a second connecting part 21, a third connecting part 25, and fourth connecting parts 26. The first connecting parts 20 extend along a height direction of the cabinet 10, two first connecting parts 20 are spaced apart along a width direction of the cabinet 10, and the second connecting part 21 extends along the width direction of the cabinet 10 and is connected to the two first connecting parts 20. The third connecting part 25 is disposed between the two first connecting parts 20. The third connecting part 25 includes two third connecting members 250, where the two third connecting members 250 are disposed crosswise on the second connecting part 21 and are respectively connected to ends of the first connecting parts 20. Two fourth connecting parts 26 are each disposed on one side of one first connecting part 20 facing away from the other first connecting part 20. The fourth connecting part 26 includes two fourth connecting members 260, the two fourth connecting members 260 are disposed crosswise on the second connecting part 21, one end of one fourth connecting member 260 is connected to one end of the first connecting part 20 adjacent thereto close to the top surface 11, and one end of the other fourth connecting member 260 is connected to one end of the first connecting part 20 adjacent thereto close to the bottom surface 12. Two opposite ends of the first connecting part 20 are each connected to a first fixing part 23 and are detachably connected to the top surface 11 and the bottom surface 12 through the first fixing part 23 respectively, where the first fixing part 23 include bolts, that is, the first connecting parts 20 may be detachably connected to the top surface 11 and the bottom surface 12 via bolts. Two opposite ends of the second connecting part 21 are each connected to a second fixing part 24 and are detachably connected to the third side surface 13c and the fourth side surface 13d through the second fixing part 24 respectively. The second fixing part 24 includes bolts, that is, the second connecting part 21 may be detachably connected to the third side surface 13c and the fourth side surface 13d via bolts. Two ends of the fourth connecting member 260 away from the first connecting part are each connected to a third fixing part 27. One fourth connecting part 26 is detachably connected to the top surface 11, the bottom surface 12, and the third side surface 13c through two third fixing parts 27; and the other fourth connecting part 26 is detachably connected to the top surface 11, the bottom surface 12, and the fourth side surface 13d through two third fixing parts 27. The fourth connecting parts 26 include bolts, that is, the fourth connecting parts 26 may be detachably connected to the bottom surface 12, the top surface 11, the third side surface 13c, and the fourth side surface 13d via bolts. The battery 100 further includes a casing 102, where the casing 102 is provided on the side surfaces 13 of the cabinet 10 to protect the battery modules 101 in the cabinet 10.

## Claims

1. A battery (100), comprising:
a cabinet (10), the cabinet (10) being internally provided with a chamber (10a) and the cabinet (10) comprising a top surface (11), a bottom surface (12), and a plurality of side surfaces (13), wherein the top surface (11) and the bottom surface (12) are disposed opposite each other, the plurality of side surfaces (13) enclose the top surface (11) at one end, the plurality of side surfaces (13) enclose the bottom surface (12) at the other end, and the top surface (11), the bottom surface (12), and the plurality of side surfaces (13) collectively form the chamber (10a); and
a plurality of battery modules (101), disposed in the chamber (10a) and sequentially arranged in a direction from the top surface (11) to the bottom surface (12);
wherein at least one of the plurality of side surfaces (13) is configured to be detachable from the cabinet (10),
the plurality of side surfaces (13) comprise a first side surface (13a), a second side surface (13b), a third side surface (13c), and a fourth side surface (13d), the first side surface (13a) and the second side surface (13b) are disposed opposite each other, and the third side surface (13c) and the fourth side surface (13d) are disposed opposite each other; and
areas of the first side surface (13a) and the second side surface (13b) are each greater than those of the third side surface (13c) and the fourth side surface (13d);
and wherein
the first side surface (13a) is configured to be detachably connected to the top surface (11), the bottom surface (12), the third side surface (13c), and the fourth side surface (13d);
and comprises first connecting parts (20) and a second connecting part (21), wherein
the first connecting parts (20) extend along a height direction of the cabinet (10), two first connecting parts (20) are spaced apart along a width direction of the cabinet (10), and the second connecting part (21) extends along the width direction of the cabinet (10) and is connected to the two first connecting parts (20).

2. The battery (100) according to claim 1, wherein
two opposite ones of the plurality of side surfaces (13) are both configured to be detachable from the cabinet (10).

3. The battery (100) according to claim 1 or 2, wherein
the first side surface (13a) further comprises a first fixing part (23) and a second fixing part (24); two opposite ends of the first connecting part (20) are each connected to the first fixing part (23) and are detachably connected to the top surface (11) and the bottom surface (12) through the first fixing part (23) respectively; and two opposite ends of the second connecting part (21) are each connected to the second fixing part (24) and are detachably connected to the third side surface (13c) and the fourth side surface (13d) through the second fixing part (24) respectively.

4. The battery (100) according to any one of claims 1 to 3, wherein
the first side surface (13a) further comprises a third connecting part (25) disposed between the two first connecting parts (20), wherein
the third connecting part (25) comprises two third connecting members (250), the two third connecting members (250) are disposed crosswise on the second connecting part (21), one end of one third connecting member (250) is connected to one end of one first connecting part (20) close to the top surface (11), and the other end of the third connecting member (250) is connected to one end of the other first connecting part (20) close to the bottom surface (12).

5. The battery (100) according to any one of claims 1 to 4, wherein
the first side surface (13a) further comprises fourth connecting parts (26), wherein two fourth connecting parts (26) are each disposed on one side of one first connecting part (20) facing away from the other first connecting part (20); and
the fourth connecting part (26) comprises two fourth connecting members (260), the two fourth connecting members (260) are disposed crosswise on the second connecting part (21), one end of one fourth connecting member (260) is connected to one end of the first connecting part (20) adjacent thereto close to the top surface (11), and one end of the other fourth connecting member (260) is connected to one end of the first connecting part (20) adjacent thereto close to the bottom surface (12).

6. The battery (100) according to claim 5, wherein
the first side surface (13a) further comprises a third fixing part (27), and ends of the fourth connecting members (260) away from the first connecting parts (20) are each connected to the third fixing part (27); and
one fourth connecting part (26) is detachably connected to the top surface (11), the bottom surface (12), and the third side surface (13c) through the third fixing part (27), and the other fourth connecting part (26) is detachably connected to the top surface (11), the bottom surface (12), and the fourth side surface (13d) through the third fixing part (27).

7. The battery (100) according to any one of claims 1 to 6, wherein
the cabinet (10) further comprises a plurality of layers of supporting member sets (28), the plurality of layers of supporting member sets (28) are spaced apart in the chamber (10a) along the direction from the top surface (11) to the bottom surface (12), and each layer of supporting member sets (28) support the battery modules (101).

8. The battery (100) according to claim 7, wherein
the supporting member set (28) comprises a plurality of supporting members (281) and a plurality of supporting and fixing members (282), the plurality of supporting members (281) are respectively disposed on inner walls of all the side surfaces (13) and are configured to support the battery modules (101), and all the supporting members (281) are connected to the battery modules (101) through the supporting and fixing members (282).

9. An electric device, comprising the battery (100) according to any one of claims 1 to 8, wherein the battery (100) is configured to supply electrical energy.

10. The electric device according to claim 9, wherein
two opposite ones of the plurality of side surfaces (13) are both configured to be detachable from the cabinet (10).

## Patentansprüche

1. Batterie (100), umfassend:
einen Schrank (10), wobei der Schrank (10) innen mit einer Kammer (10a) versehen ist und der Schrank (10) eine Oberseite (11), eine Unterseite (12) und eine Mehrzahl von Seitenflächen (13) umfasst, wobei die Oberseite (11) und die Unterseite (12) einander gegenüberliegend angeordnet sind, die Mehrzahl von Seitenflächen (13) die Oberseite (11) an einem Ende umschließen, die Mehrzahl von Seitenflächen (13) die Unterseite (12) an dem anderen Ende umschließen und die Oberseite (11), die Unterseite (12) und die Mehrzahl von Seitenflächen (13) gemeinsam die Kammer (10a) bilden; und
eine Mehrzahl von Batteriemodulen (101), die in der Kammer (10a) angeordnet und in einer Richtung von der Oberseite (11) zur Unterseite (12) nacheinander angeordnet sind;
wobei mindestens eine der Mehrzahl von Seitenflächen (13) dazu ausgelegt ist, von dem Schrank (10) lösbar zu sein, **dadurch gekennzeichnet, dass**
die Mehrzahl von Seitenflächen (13) eine erste Seitenfläche (13a), eine zweite Seitenfläche (13b), eine dritte Seitenfläche (13c) und eine vierte Seitenfläche (13d) umfasst, wobei die erste Seitenfläche (13a) und die zweite Seitenfläche (13b) einander gegenüberliegend angeordnet sind und die dritte Seitenfläche (13c) und die vierte Seitenfläche (13d) einander gegenüberliegend angeordnet sind; und
Flächen der ersten Seitenfläche (13a) und der zweiten Seitenfläche (13b) jeweils größer sind als diejenigen der dritten Seitenfläche (13c) und der vierten Seitenfläche (13d);
und wobei
die erste Seitenfläche (13a) dazu ausgelegt ist, lösbar mit der Oberseite (11), der Unterseite (12), der dritten Seitenfläche (13c) und der vierten Seitenfläche (13d) verbunden zu werden;
und erste Verbindungsteile (20) und ein zweites Verbindungsteil (21) umfasst, wobei
sich die ersten Verbindungsteile (20) in einer Höhenrichtung des Schranks (10) erstrecken, zwei erste Verbindungsteile (20) in einer Breitenrichtung des Schranks (10) voneinander beabstandet sind und sich das zweite Verbindungsteil (21) in Breitenrichtung des Schranks (10) erstreckt und mit den zwei ersten Verbindungsteilen (20) verbunden ist.

2. Batterie (100) nach Anspruch 1, wobei
zwei einander gegenüberliegende der Mehrzahl von Seitenflächen (13) beide dazu ausgelegt sind, von dem Schrank (10) lösbar zu sein.

3. Batterie (100) nach Anspruch 1 oder 2, wobei
die erste Seitenfläche (13a) ferner ein erstes Befestigungsteil (23) und ein zweites Befestigungsteil (24) umfasst; zwei gegenüberliegende Enden des ersten Verbindungsteils (20) jeweils mit dem ersten Befestigungsteil (23) verbunden sind und jeweils über das erste Befestigungsteil (23) lösbar mit der Oberseite (11) und der Unterseite (12) verbunden sind; und zwei gegenüberliegende Enden des zweiten Verbindungsteils (21) jeweils mit dem zweiten Befestigungsteil (24) verbunden sind und jeweils über das zweite Befestigungsteil (24) lösbar mit der dritten Seitenfläche (13c) und der vierten Seitenfläche (13d) verbunden sind.

4. Batterie (100) nach einem der Ansprüche 1 bis 3, wobei
die erste Seitenfläche (13a) ferner ein drittes Verbindungsteil (25) umfasst, das zwischen den zwei ersten Verbindungsteilen (20) angeordnet ist, wobei
das dritte Verbindungsteil (25) zwei dritte Verbindungselemente (250) umfasst, die zwei dritten Verbindungselemente (250) kreuzweise auf dem zweiten Verbindungsteil (21) angeordnet sind, ein Ende eines dritten Verbindungselements (250) mit einem Ende eines ersten Verbindungsteils (20), das nahe bei der Oberseite (11) liegt, verbunden ist und das andere Ende des dritten Verbindungselements (250) mit einem Ende des anderen ersten Verbindungsteils (20), das nahe bei der Unterseite (12) liegt, verbunden ist.

5. Batterie (100) nach einem der Ansprüche 1 bis 4, wobei
die erste Seitenfläche (13a) ferner vierte Verbindungsteile (26) umfasst, wobei zwei vierte Verbindungsteile (26) jeweils auf einer Seite eines ersten Verbindungsteils (20) angeordnet sind, die von dem anderen ersten Verbindungsteil (20) weg weist; und
das vierte Verbindungsteil (26) zwei vierte Verbindungselemente (260) umfasst, wobei die zwei vierten Verbindungselemente (260) kreuzweise auf dem zweiten Verbindungsteil (21) angeordnet sind, ein Ende eines vierten Verbindungselements (260) mit einem Ende des zugeordneten ersten Verbindungsteils (20), das nahe bei der Oberseite (11) liegt, verbunden ist und ein Ende des anderen vierten Verbindungselements (260) mit einem Ende des zugeordneten ersten Verbindungsteils (20), das nahe bei der Unterseite (12) liegt, verbunden ist.

6. Batterie (100) nach Anspruch 5, wobei
die erste Seitenfläche (13a) ferner ein drittes Befestigungsteil (27) umfasst und Enden der vierten Verbindungselemente (260), die von den ersten Verbindungsteilen (20) weg liegen, jeweils mit dem dritten Befestigungsteil (27) verbunden sind; und
ein viertes Verbindungsteil (26) über das dritte Befestigungsteil (27) lösbar mit der Oberseite (11), der Unterseite (12) und der dritten Seitenfläche (13c) verbunden ist und das andere vierte Verbindungsteil (26) über das dritte Befestigungsteil (27) lösbar mit der Oberseite (11), der Unterseite (12) und der vierten Seitenfläche (13d) verbunden ist.

7. Batterie (100) nach einem der Ansprüche 1 bis 6, wobei
der Schrank (10) ferner eine Mehrzahl von Lagen von Trägerelementsätzen (28) umfasst, die Mehrzahl von Lagen von Trägerelementsätzen (28) in der Kammer (10a) in einer Richtung von der Oberseite (11) zur Unterseite (12) voneinander beabstandet sind und jede Lage von Trägerelementsätzen (28) die Batteriemodule (101) trägt.

8. Batterie (100) nach Anspruch 7,
wobei der Trägerelementsatz (28) eine Mehrzahl von Trägerelementen (281) und eine Mehrzahl von Trage- und Befestigungselementen (282) umfasst, wobei die Mehrzahl von Trägerelementen (281) jeweils an Innenwänden aller Seitenflächen (13) angeordnet sind und dazu ausgelegt sind, die Batteriemodule (101) zu tragen, und alle Trägerelemente (281) über die Trage- und Befestigungselemente (282) mit den Batteriemodulen (101) verbunden sind.

9. Elektrische Vorrichtung, umfassend die Batterie (100) nach einem der Ansprüche 1 bis 8, wobei die Batterie (100) dazu ausgelegt ist, elektrische Energie bereitzustellen.

10. Elektrische Vorrichtung nach Anspruch 9, wobei
zwei einander gegenüberliegende der Mehrzahl von Seitenflächen (13) beide dazu ausgelegt sind, von dem Schrank (10) lösbar zu sein.

## Revendications

1. Batterie (100), comprenant :
une armoire (10), l'armoire (10) étant pourvue intérieurement d'une chambre (10a) et l'armoire (10) comprenant une surface supérieure (11), une surface inférieure (12) et une pluralité de surfaces latérales (13), la surface supérieure (11) et la surface inférieure (12) étant disposées en regard l'une de l'autre, la pluralité de surfaces latérales (13) entourant la surface supérieure (11) à une extrémité, la pluralité de surfaces latérales (13) entourant la surface inférieure (12) à l'autre extrémité, et la surface supérieure (11), la surface intérieure (12) et la pluralité de surfaces latérales (13) formant collectivement la chambre (10a) ; et
une pluralité de modules de batterie (101), disposés dans la chambre (10a) et agencés les uns à la suite des autres dans une direction allant de la surface supérieure (11) à la surface inférieure (12) ;
au moins l'une de la pluralité de surfaces latérales (13) étant conçue pour pouvoir être détachée de l'armoire (10), **caractérisée en ce que**
la pluralité de surfaces latérales (13) comprennent une première surface latérale (13a), une deuxième surface latérale (13b), une troisième surface latérale (13c) et une quatrième surface latérale (13d), la première surface latérale (13a) et la deuxième surface latérale (13b) sont disposées en regard l'une de l'autre, et la troisième surface latérale (13c) et la quatrième surface latérale (13d) sont disposées en regard l'une de l'autre ; et
des aires de la première surface latérale (13a) et la deuxième surface latérale (13b) sont chacune supérieures à celles de la troisième surface latérale (13c) et la quatrième surface latérale (13d) ;
et
la première surface latérale (13a) étant conçue pour être raccordée de manière détachable à la surface supérieure (11), à la surface inférieure (12), à la troisième surface latérale (13c) et à la quatrième surface latérale (13d) ;
et comprenant des premières parties de raccordement (20) et une deuxième partie de raccordement (21),
les premières parties de raccordement (20) s'étendant le long d'une direction de hauteur de l'armoire (10), deux premières parties de raccordement (20) étant mutuellement espacées le long d'une direction de largeur de l'armoire (10), et la deuxième partie de raccordement (21) s'étendant le long de la direction de largeur de l'armoire (10) et étant raccordée aux deux premières parties de raccordement (20).

2. Batterie (100) selon la revendication 1, dans laquelle
deux surfaces en regard parmi la pluralité de surfaces latérales (13) sont toutes deux conçues pour pouvoir être détachées de l'armoire (10).

3. Batterie (100) selon la revendication 1 ou 2, dans laquelle
la première surface latérale (13a) comprend, en outre, une première partie de fixation (23) et une deuxième partie de fixation (24) ; deux extrémités opposées de la première partie de raccordement (20) sont chacune raccordées à la première partie de fixation (23) et sont respectivement raccordées de manière détachable à la surface supérieure (11) et à la surface inférieure (12) par le biais de la première partie de fixation (23) ; et deux extrémités opposées de la deuxième partie de raccordement (21) sont chacune raccordées à la deuxième partie de fixation (24) et sont respectivement raccordées de manière détachable à la troisième surface latérale (13c) et à la quatrième surface latérale (13d) par le biais de la deuxième partie de fixation (24).

4. Batterie (100) selon l'une quelconque des revendications 1 à 3, dans laquelle
la première surface latérale (13a) comprend, en outre, une troisième partie de raccordement (25) disposée entre les deux premières parties de raccordement (20), dans laquelle
la troisième partie de raccordement (25) comprend deux troisièmes éléments de raccordement (250), les deux troisièmes éléments de raccordement (250) sont disposés en croix sur la deuxième partie de raccordement (21), une extrémité d'un troisième élément de raccordement (250) est raccordée à une extrémité d'une première partie de raccordement (20) proche de la surface supérieure (11), et l'autre extrémité du troisième élément de raccordement (250) est raccordée à une extrémité de l'autre première partie de raccordement (20) proche de la surface inférieure (12).

5. Batterie (100) selon l'une quelconque des revendications 1 à 4, dans laquelle
la première surface latérale (13a) comprend, en outre, des quatrièmes parties de raccordement (26), deux quatrièmes parties de raccordement (26) étant chacune disposées sur un côté d'une première partie de raccordement (20) orienté à l'opposé de l'autre première partie de raccordement (20) ; et
les quatrièmes parties de raccordement (26) comprennent deux quatrièmes éléments de raccordement (260), les deux quatrièmes éléments de raccordement (260) sont disposés en croix sur la deuxième partie de raccordement (21), une extrémité d'un quatrième élément de raccordement (260) est raccordée à une extrémité de la première partie de raccordement (20) adjacente à elle proche de la surface supérieure (11), et une extrémité de l'autre quatrième élément de raccordement (260) est raccordée à une extrémité de la première partie de raccordement (20) adjacente à elle proche de la surface inférieure (12).

6. Batterie (100) selon la revendication 5, dans laquelle
la première surface latérale (13a) comprend, en outre, une troisième partie de fixation (27), et des extrémités des quatrièmes éléments de raccordement (260) éloignées des premières parties de raccordement (20) sont chacune raccordées à la troisième partie de fixation (27) ; et
une quatrième partie de raccordement (26) est raccordée de manière détachable à la surface supérieure (11), à la surface inférieure (12) et à la troisième surface latérale (13c) par le biais de la troisième partie de fixation (27), et l'autre quatrième partie de raccordement (26) est raccordée de manière détachable à la surface supérieure (11), à la surface inférieure (12) et à la quatrième surface latérale (13d) par le biais de la troisième partie de fixation (27).

7. Batterie (100) selon l'une quelconque des revendications 1 à 6, dans laquelle
l'armoire (10) comprend, en outre, une pluralité de couches d'ensembles d'éléments de support (28), la pluralité de couches d'ensembles d'éléments de support (28) étant mutuellement espacées dans la chambre (10a) le long de la direction allant de la surface supérieure (11) à la surface inférieure (12), et chaque couche d'ensembles d'éléments de support (28) supportant les modules de batterie (101).

8. Batterie (100) selon la revendication 7, dans laquelle
l'ensemble d'éléments de support (28) comprend une pluralité d'éléments de support (281) et une pluralité d'éléments de support et de fixation (282), la pluralité d'éléments de support (281) sont respectivement disposés sur des parois intérieures de toutes les surfaces latérales (13) et sont conçus pour supporter les modules de batterie (101), et tous les éléments de support (281) sont raccordés aux modules de batterie (101) par le biais des éléments de support et de fixation (282).

9. Dispositif électrique, comprenant la batterie (100) selon l'une quelconque des revendications 1 à 8, dans lequel la batterie (100) est conçue pour fournir de l'énergie électrique.

10. Dispositif électrique selon la revendication 9, dans lequel
deux surfaces en regard parmi la pluralité de surfaces latérales (13) sont toutes deux conçues pour pouvoir être détachées de l'armoire (10).
